(19) Europäisches Patentamt
European Patent Office
Office européen des brevets

(11) **EP 3 373 918 B1**

(12) **EUROPEAN PATENT SPECIFICATION**

(45) Date of publication and mention
of the grant of the patent:
**09.10.2024 Bulletin 2024/41**

(21) Application number: **15908443.3**

(22) Date of filing: **12.11.2015**

(51) International Patent Classification (IPC):
**A61K 9/58** $^{(2006.01)}$       **A61K 9/36** $^{(2006.01)}$
**C08B 15/04** $^{(2006.01)}$       **C08H 8/00** $^{(2010.01)}$
**D21C 9/00** $^{(2006.01)}$

(52) Cooperative Patent Classification (CPC):
**C08H 8/00; C08B 15/04; D21C 9/00**

(86) International application number:
**PCT/US2015/060261**

(87) International publication number:
**WO 2017/082900 (18.05.2017 Gazette 2017/20)**

(54) **PRODUCTION OF CARBOXYLATED NANOCELLULOSES**

HERSTELLUNG VON CARBOXYLIERTEN NANOCELLULOSEN

PRODUCTION DE NANOCELLULOSES CARBOXYLÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.09.2018 Bulletin 2018/38**

(73) Proprietor: **The Research Foundation for The State
University of New York
Albany, New York 12207 (US)**

(72) Inventors:
• **HSIAO, Benjamin S.
Setauket, New York 11733 (US)**

• **CHU, Benjamin
Setauket, New York 11733 (US)**
• **SHARMA, Priyanka R.
East Setauket, New York 11733 (US)**

(74) Representative: **Mann, Georgia
Withers & Rogers LLP
2 London Bridge
London SE1 9RA (GB)**

(56) References cited:
WO-A1-2014/195971       WO-A2-2008/073186
US-A- 5 853 877       US-A1- 2007 203 335
US-A1- 2015 027 648       US-B1- 6 627 749

**Description**

**BACKGROUND**

The present disclosure relates to novel methods for forming carboxylated nanocelluloses. More specifically, the present disclosure provides for environmentally friendly and cost-effective methods for producing nanocelluloses.

Cellulose, the major constituent of plant cell walls, is the most abundant biopolymer on earth, and thus it is a sustainable and renewable resource for energy and production of various materials. The presence of hydroxyl groups in the cellulose molecule provides a unique platform for molecular modifications to form different useful derivatives. Among these derivatives, oxidized celluloses have been used in biomedical applications due to their unique properties related to biodegradability, biocompatibility and/or bioabsorbability. Consequently, a great deal of research has been carried out to investigate the structure and property relationships of carboxylated cellulose.

For the oxidation process to occur, the $-CH_2OH$ functional group attached to the fifth carbon (C-5) would experience a net gain of an oxygen atom and a net loss of two hydrogen atoms as it is being converted to a carboxyl group (-COOH). Oxidation of C-6 would aid the defibrillation process because the presence of negatively charged carboxyl groups on the surface of the microfibrils would cause the nanofibers to repel each other.

One popular method to prepare oxidized cellulose nanofibers is by the TEMPO-mediated oxidation method. TEMPO (2,2,6,6-tetramethylpiperidine-1-oxylradical)-mediated oxidation is only able to defibrillate chemically treated and processed forms of biomass and does not have any significant morphological effect when applied to native celluloses, such as cotton linter. In the TEMPO method, the raw material (biomass) must be pretreated to extract cellulose therefrom. Methods for pretreatment include, for example, steam explosion, whereby the biomass is treated at a pressure of approximately 140 Pascal, and a temperature from about 200-250°C; an ammonia explosion method, where the biomass is treated with ammonia under high pressure; or a chemical treatment method, which includes treating the biomass with sodium hydroxide, peroxides, sodium borate, nitric acid, and dimethylsulfoxide. The extracted cellulose is then bleached by treatment with sodium chloride while boiling.

The TEMPO and NaBr (sodium bromide) are then added to the cellulose suspension, which is kept at a pH of 10-11 by adding NaOH (sodium hydroxide). The primary oxidant NaClO (sodium hypochlorite) is subsequently added, and it is reduced to NaCl (sodium chloride) in this step. The NaBr is oxidized to NaBrO (sodium hypobromite), but NaBrO is subsequently reduced to form NaBr, forming a cyclic system. The TEMPO radical works in a similar manner, being oxidized and then reduced in order to oxidize the glucose monomers, converting the primary hydroxyl groups to carboxylates via an intermediate step involving the formation of aldehydes.

TEMPO-mediated oxidation is well suited for laboratory use and has a high reaction rate and yield. In addition, only a small amount of cellulose degradation occurs throughout the process. However, TEMPO-mediated oxidation is not an efficient method for the production of oxidized cellulose nanofibers on a larger scale because it requires the use of chlorine-containing chemicals, which are harmful to the environment, and difficult to recycle. In addition, TEMPO-mediated oxidation is a process that is high in energy consumption, requiring extensive mechanical treatments, such as homogenization and sonication.

WO 2014/195971 A discloses a process for the preparation of nanostructured oxidized/carboxy cellulose with high carboxy content and high yield, by subjecting non-wood, lignocellulose, sugarcane bagasse derived a-cellulose or cotton cellulose to oxidation at a suitable temperature, wherein the particle shape is spherical, particle size of synthesized carboxy cellulose is in the range of 1-100 nm and degree of polymerization (DP) is in the range 50-70.

US 6627749 B discloses a controlled chemical method to produce oxidized cellulose in high yields (75-95%) and different levels of oxidation (carboxyl content <25.6%, w/w), suitable for use as an immobilizing matrix or carrier for drugs, chemicals, and biological macromolecules, by reacting a cellulose material with a mixture of phosphoric acid and nitric acid and a small but adequate amounts of sodium nitrite at room temperature for a period until the desired oxidation level is obtained.

US 2007/203335 A discloses a process for preparing 6-carboxy-cellulose nitrates and also to their use, by oxidizing cellulose selectively on the C6 carbon at least partially, based on the parent glucose units of the cellulose, and then subjecting the resulting product to nitration.

Improved methods for producing carboxylated nanocelluloses remain desirable.

**SUMMARY**

The present disclosure provides methods for producing carboxylated nanocelluloses. The methods, utilizing benign materials, are environmentally friendly and cost effective. In an aspect of the invention, the method includes contacting plant biomass with an acid component including nitric acid to form a first mixture; contacting the first mixture with an oxidizing agent including a nitrate salt selected from sodium nitrate, potassium nitrate, calcium nitrate, magnesium nitrate, lithium nitrate, ammonium nitrate, nitrate esters, and combinations thereof to form a second mixture; holding the second mixture at a temperature from 40°C to 70°C, for a period of time from 30 minutes to 72 hours; and recovering carboxycellulose nanofibers from the second mixture, wherein the carboxycellulose nanofibers have a mean fiber length from 50 to 1000 nm.

Sources of plant biomass include lignocellulose wood, non-lignocellulose wood, lignocellulose, pure cellulose, and combinations of thereof. In embodiments, sources of plant biomass include non-wood sources such as jute, bamboo, cotton, banana rachis, wheat straw, barley, hemp, flax straw, coconut fiber, soy hull, pea hull fiber, rice husk, sugarcane bagasse, pineapple leaf rachis, sisal fiber, tunicates, black spruce, eucalyptus, valonia, bacterial celluloses, and combinations thereof.

In embodiments, the acid component, in addition to nitric acid, may also include an additional acid such as hydrochloric acid, sulfuric acid, acetic acid, hydrobromic acid, hydrofluoric acid, and combinations thereof.

Suitable nitrite salts for use, together with a nitrate salt according to the aspect of the invention, as the oxidizing agent include sodium nitrite, potassium nitrite, calcium nitrite, magnesium nitrite, lithium nitrite, ammonium nitrite, nitrite esters, and combinations thereof.

The process of the present disclosure may be conducted without any additional mechanical treatments. However, in some cases, the process may include these additional mechanical treatments, including sonication, homogenization, cryocrushing, grinding, steam explosion, and combinations thereof.

In an embodiment, the acid component is at a concentration from about 10 mmol to about 300 mmol. In an embodiment, the oxidizing agent is at a concentration from about 0.1 mmol to about 60 mmol.

The carboxy groups on the surface of the carboxycellulose nanofibers thus produced can then be easily modified into functional derivatives such as amide, acetate, ether, ester, etc.

## BRIEF DESCRIPTION OF THE DRAWINGS

The accompanying drawings, which are included to provide further understanding of the subject technology and are incorporated in and constitute a part of this specification, illustrate aspects of the disclosure and together with the description serve to explain the principles of the subject technology.

Figure 1 is a spectra obtained by Fourier transform infrared spectroscopy (FTIR) of bamboo cellulose before treatment in accordance with the present disclosure;

Figure 2 is an FTIR spectra of carboxylated/oxidized bamboo cellulose nanofibers after treatment in accordance with the present disclosure;

Figure 3 is an image obtained by transmission electron microscopy (TEM) of carboxylated/oxidized bamboo cellulose nanofibers treated in accordance with the present disclosure;

Figure 4 is an FTIR spectra of 2N NaOH treated jute fibers;

Figure 5 is an FTIR spectra of carboxylated/oxidized cellulose nanofibers obtained from 2N NaOH treated jute fibers processed in accordance with the present disclosure;

Figure 6 is a TEM image of carboxylated/oxidized cellulose nanofibers obtained from 2N NaOH treated jute fibers processed in accordance with the present disclosure;

Figure 7 is an FTIR spectra of 4N NaOH treated jute fibers processed in accordance with the present disclosure;

Figure 8 is an FTIR spectra of carboxylated/oxidized cellulose nanofibers obtained from 4N NaOH treated jute fibers processed in accordance with the present disclosure;

Figure 9 is a TEM image of carboxylated/oxidized cellulose nanofibers obtained from 4N NaOH treated jute fibers processed in accordance with the present disclosure;

Figure 10 is an FTIR spectra of 5N NaOH treated jute fibers;

Figure 11 is an FTIR spectra of carboxylated/oxidized cellulose nanofibers obtained from 5N base treated jute fibers processed in accordance with the present disclosure;

Figure 12 is a TEM image of carboxylated/oxidized cellulose nanofibers obtained from 5N NaOH treated jute fibers processed in accordance with the present disclosure;

Figure 13 is a TEM Image of carboxylated/oxidized cellulose nanofibers processed in accordance with the present disclosure from Raw Jute (TEM at 395000x and 80 kv);

Figure 14 is a TEM image of carboxylated/oxidized cellulose nanofibers obtained from raw jute fibers by nitric acid treatment processed in accordance with the present disclosure;

Figure 15 is an FTIR spectra of carboxylated/oxidized cellulose nanofibers obtained from raw jute fibers by nitric acid treatment processed in accordance with the present disclosure;

Figure 16 is an ultraviolet (UV) absorbance spectra of 0.001wt. % lignin and carboxylated cellulose nanofibers (prepared from jute fiber) processed in accordance with the present disclosure;

Figure 17 is a curve generated by thermogravimetric analysis (TGA) and Derivative Thermogravimetric analysis (TGA/DTG) for raw jute fibers; and

Figure 18 is a TGA/DTG curve of carboxylated cellulose nanofibers obtained from jute fibers.

## DETAILED DESCRIPTION

The present disclosure provides a simple and cost-effective method to produce carboxylated (or carboxy) nanocelluloses. These nanocelluloses may be in the form of nanofibers and/or nanowhiskers. The nanocelluloses may be prepared directly from raw biomass, including lignocellulose wood, non-wood sources, non-lignocellulose wood, lignocellulose, pure cellulose, and/or combinations thereof, without the need for conventional extraction/pretreatment steps.

The present disclosure is based on the discovery that, in the presence of an acid and an oxidizing agent, the simultaneous defibrillation of nanocelluloses as well as the oxidation processes to generate carboxycellulose or carboxylated cellulose nanofibers can be enhanced when compared to conventional chemical methods (e.g., hydrolysis, acid-base-organic solvent treatment) in combination with mechanical treatments (e.g., sonication, homogenization, cryocrushing, and the like). As a result, a simple two-chemical method involving only an acid and an oxidizing agent can produce carboxylated celluloses (in the form of nanofibers) having nominal diameters in the range of a few nanometers and fiber lengths in the range of several hundred nanometers. The process of the present disclosure significantly reduces the typical steps used, including significant reduction in chemicals and energy consumption and mechanical treatments such as homogenization and/or sonication, to produce nanocelluloses or carboxylated celluloses.

In addition, as noted above, some prior processes use the TEMPO oxidation agent along with sodium chlorite and sodium hypochlorite and other oxidizing reagents, which makes the process difficult, and leads to problems in recycling the TEMPO agent as well as the other chemicals used in the process. In contrast, the process of the present disclosure uses an acid and oxidizing agent to produce the carboxycellulose or carboxylated cellulose nanofibers, in which both the acid and oxidizing agent can be easily recycled.

The use of these inexpensive and recyclable chemicals allows this process to be more favorable from a cost-benefit perspective and, therefore, more practical for industrial production of carboxycellulose or carboxylated cellulose nanofibers.

The methods of the present disclosure are applicable for use with any and all raw biomasses, including lignocellulosic wood or non-wood sources including, but not limited to, jute, bamboo, cotton, banana rachis, wheat straw, barley, hemp, flax straw, coconut fiber, soy hull, pea hull fiber, rice husk, sugarcane bagasse, pineapple leaf rachis, sisal fiber, tunicates, black spruce, eucalyptus, valonia, bacterial celluloses, and combinations thereof.

The direct use of biomass from lignocellulose wood or non-wood sources, without the need for conventional extraction/pretreatment steps, can immediately reduce the consumption of many potentially toxic chemicals, in some cases by as much as 50-60%.

Moreover, the process of the present disclosure avoids the consumption of large amounts of electrical energy, which is generally used in conventional processes to extract cellulose from raw biomasses as the starting materials, e.g., steam explosion, or other high pressure explosion processes.

The methods of the present disclosure include a simple two-chemical method which includes contacting the raw biomass of lignocellulose wood or non-wood sources with an acid component and an oxidizing agent. In accordance with the invention, the acid component includes nitric acid ($HNO_3$). Nitric acid may be used by itself as the acid component, or may be combined with an additional acid. Suitable additional acids which may be used with nitric acid as the acid component include, in embodiments, hydrochloric acid (HCl), sulfuric acid ($H_2SO_4$), acetic acid ($CH_3COOH$), hydrobromic acid (HBr), hydrofluoric acid (HF) and combinations thereof. The acid component, which may be nitric acid or a combination of nitric acid with one of the other foregoing acids, may be at a concentration from about 10 mmol to about 300 mmol, in embodiments from about 20 mmol to about 250 mmol.

In accordance with the invention, the oxidizing agent includes a nitrate salt selected from sodium nitrate ($NaNO_3$), potassium nitrate ($KNO_3$), calcium nitrate ($Ca(NO_3)_2$), magnesium nitrate ($Mg(NO_3)_2$), lithium nitrate ($LiNO_3$), ammonium nitrate ($NH_4NO_3$), nitrate esters, and combinations thereof. Suitable oxidizing agents, that may be used in addition to the nitrate salt, include nitrite salts. Suitable nitrite salts include, for example, sodium nitrite ($NaNO_2$), potassium nitrite ($KNO_2$), calcium nitrite ($Ca(NO_2)_2$), magnesium nitrite ($Mg(NO_2)_2$), lithium nitrite ($LiNO_2$), ammonium nitrite ($NH_4NO_2$), nitrite esters, and/or combinations thereof. The oxidizing agent may be at a concentration from about 0.1 mmol to about 60 mmol, in embodiments from about 10 mmol to about 30 mmol.

In accordance with the present disclosure, the plant biomass is chopped or otherwise reduced in size and then treated with an acid as described above to wet the plant biomass. In some embodiments, the plant biomass may be washed with acetone, water, sodium hydroxide, potassium hydroxide, ethyl acetate, ethanol, and combinations thereof, prior to addition of the acid. The oxidizing agent(s), is then added thereto, and the materials are held at a temperature from 40°C to 70°C, in embodiments from about 40°C to about 60°C.

The methods of the present disclosure do not require the use of mechanical steps. The process can be completed in a short time period, from 30 minutes to 72 hours, in other embodiments from about 3 hours to about 12 hours, without the aid of mechanical treatments.

In some embodiments, however, additional mechanical treatments may be used with the methods of the present disclosure. Such methods include, for example, sonication, homogenization, cryocrushing, grinding, steam explosion and combinations thereof.

Sonication is a method within the purview of those skilled in the art and includes the use of sound wave energy to break up materials. Commercially available sonicators are available for purchase, and include those sold by Misonix. Times and conditions for sonication may be determined following the manufacturer's directions.

Homogenization is a method within the purview of those skilled in the art. Commercially available homogenizers are available for purchase, and include those sold by APV and/or Gaulin. Homogenization includes shearing, impact and cavitation forces to break up materials. The pressures applied can be about 1000 bar, for example. Times and conditions for sonication may be determined following the manufacturer's directions.

Cryocrushing is a method within the purview of those skilled in the art and includes the use of a cryogenic liquid, such as liquid nitrogen, to cool materials (down to temperatures as low as -196°C) to the point they become brittle, thereby facilitating their mechanical reduction. Times and conditions for cryocrushing may be determined following the manufacturer's directions.

Steam explosion is a violent boiling or flashing of water into steam, occurring when water is either superheated, or rapidly heated by fine hot debris introduced therein. In general, steam explosion is a process in which biomass can be treated with hot steam (180°C to 240°C) under pressure (1 to 3.5 MPa) followed by an explosive decompression of the biomass that results in a rupture of the rigid structure of the biomass fibers.

Where optional extra mechanical treatments such as sonication, homogenization, cryocrushing, and the like are used, the completion time for the reaction can be substantially shortened, in embodiments to from about 1 minute to about 6 hours, in other embodiments from about 5 minutes to about 1 hour.

After the reaction of acid and oxidizing agent is complete, the resulting carboxy or carboxylated nanocelluloses may be collected by means within the purview of those skilled in the art, including, for example, decantation, centrifugation and/or dialysis.

The dimensions of the carboxycellulose nanofibers produced by this method have a fiber length (L) equal to or less than 1000 nm, in embodiments from about 50 to about 1000 nm, in other embodiments from about 150 nm to about 900 nm.

The carboxycellulose nanofibers produced by this method have a nominal diameter (D) from about 2 nm to about 20 nm, in embodiments from about 3 nm to about 10 nm.

The resulting carboxycellulose or carboxylated celluloses nanofibers have a carboxy content from about 5% to about 30%, in embodiments from about 10% to about 25%, but no aldehyde. The resulting carboxycellulose nanofibers have a lignin content from about 1% by weight to about 15% by weight, in embodiments from about 2% by weight to about 10% by weight.

The acids and oxidizing agents described herein, are inexpensive and recyclable chemicals. The methods of the present disclosure allow the production process to be very cost-effective and environmentally friendly, and avoid the disadvantages associated with other chemical methods, such as the TEMPO-mediated oxidation method. As noted above, the TEMPO method involves high cost chemicals, where the recycling of unused TEMPO reagents or other oxidizing reagents is often problematic.

Carboxylated cellulose nanofibers produced by the methods of the present disclosure have a wide array of applications, ranging from the papermaking industry to water purification and biomedical applications.

The carboxy groups on the surface of the nanocelluloses thus produced can then be easily modified into functional derivatives such as amide, acetate, ether, etc. Methods for modifying the carboxy groups into these functional derivatives are within the purview of those skilled in the art.

Nanofibers formed of oxidized, or carboxylated, or carboxy nanocellulose have many unique physical properties, including being biodegradable, functionalizable, high in strength and low in weight. In addition, as cellulose is the most abundant compound found on earth, its renewability makes this biopolymer an environmentally friendly and viable alternative to the more expensive and synthetic carbon and silicon-based nanostructured materials.

In medicine, carboxylated nanocelluloses can be used as absorbable hemostatic agents to stop bleeding during and after surgical procedures because the materials can easily be degraded by the human body. Their high tensile strength also makes cellulose nanofibers a good material to reinforce polymer composites for structural applications.

Nanofibers of the present disclosure may also be used in forming filtration membranes. For example, a thin-film nanofibrous composite membrane based on oxidized cellulose nanofibers may be formed with the nanofibers of the present disclosure. Ma, Hongyang, et al., "Ultra-fine Cellulose Nanofibers: New Nano-scale Materials for Water Purification," Journal of Materials Chemistry 21 (2011): 7507-10. These thin film composite membranes are efficient in microfiltration, ultrafiltration, and/or nanofiltration for water purification applications and have the potential to be implemented in developing countries because of the low cost and availability of cellulose.

Although cellulose is hydrophilic, chemical modifications can make the fibers hydrophobic. This property change can be accomplished by the addition of functional groups, such as ethers and esters and would, therefore, make carboxylated cellulose (carboxycellulose) nanofibers well suited for membrane distillation that can convert brackish water or seawater to drinking water.

The following Examples are being submitted to illustrate embodiments of the present disclosure. The Examples are intended to be illustrative only and are not intended to limit the scope of the present disclosure. Also, parts and percentages are by weight unless otherwise indicated. As used herein, "room temperature" refers to a temperature of from about 20°C to about 30°C.

## COMPARATIVE EXAMPLE 1

In this example, bamboo was chosen as the source for an extracted cellulose sample because it is widely available, especially in tropical and temperate regions, and is inexpensive. Bamboo not only has a high tensile strength, but also a high Young's modulus relative to other materials such as jute. This means that applying a large stress only results in a minimal strain on the fibers. In the TEMPO method, only extracted cellulose can be used to prepare oxidized cellulose nanofibers. Thus, the bamboo cellulose sample of this example served as a point of comparison and confirmed whether or not the method of the present disclosure could replace the TEMPO-mediated oxidation in an environmentally friendly and cost-effective way.

The $HNO_3$ and $NaNO_2$ treatment of the present disclosure was first carried on the bamboo sample to determine its efficacy on extracted cellulose, in which lignin, pectin, hemicellulose and impurities had already been removed. The 70% ACS reagent grade $HNO_3$ and the $\geq$97% ACS reagent grade $NaNO_2$ were both obtained from Sigma Aldrich. The reaction was set up to run under the fume hood. An open cylindrical glass container that was filled with silicon oil (used as the heat transfer fluid) to a height of about 5 cm was placed on top of a magnetic stirrer hotplate. Using a clamp stand, a three neck round bottom flask was placed in a fixed position so that the bottom would be partially submerged in the silicon oil, which was heated to about 50°C. First, about 1 gram of the bamboo cellulose was placed into a three-neck round bottom flask. After this, about 14 mL of $HNO_3$ (nitric acid) were added to the flask. This volume of acid (nitric acid) was found to be appropriate because it was just enough to completely submerge the bamboo cellulose. About 1.96 grams of $NaNO_2$ (sodium nitrite) were then added, creating about 14 weight% solution of $NaNO_2$ and $HNO_3$. A magnetic needle stirrer was added and the mixture of cellulose, $HNO_3$ and $NaNO_2$ was stirred at about 250 rpm for about 12 hours to ensure that the macrofibrils of the bamboo cellulose absorbed the acid and oxidizing agent in a thorough and uniform manner. After about 12 hours of continuous stirring, the reaction was quenched with about 250 mL of room temperature water.

After the $HNO_3$ and $NaNO_2$ treatment, the resulting cellulose fibers were in a suspension. The suspension generally had a pH of approximately 1 to 1.5. The cellulose fibers had to be neutralized in order to prepare the samples for subsequent chemical characterization and morphological studies, as well as to make the fibers more easily implementable in a variety of applications. To separate the fibers from the acidic media and to rinse them free of $NaNO_2$, a process including centrifugation and washing was used. The centrifugation tubes were each filled with the suspension to an equal volume. The suspension then underwent several rounds of centrifugation at about 6500 rpm for about 15-30 minutes each. In between every round, the supernatant, containing $HNO_3$ and $NaNO_2$, was decanted and distilled water was added to replace the lost fluid. After ensuring that every tube was filled with the water to the same volume, the centrifugation and rinsing procedure was repeated until the pH reached approximately 2.5, as the dialysis tubing used in the following procedure could not withstand a pH below 2.

After the suspension reached a pH of about 2.5, the samples were dialyzed in order to quicken the process and decrease the use of centrifugation for extended periods of time, which would lead to greater expenditure of mechanical energy. The suspension was removed from the centrifugation tubes and syringed into the dialysis bags obtained from Sigma Aldrich, which had a 6-8 kDa molecular weight cutoff. The dialysis tubing, now with the oxidized cellulose fibers inside, was placed inside a 1000 mL beaker filled with water and put on magnetic stirring at about 250 rpm for about 24 hours in order for the fibers to return to a more neutral pH of 6-7. The water entered the tubing, neutralizing the cellulose fibers, while the remaining $HNO_3$ and $NaNO_2$ in the suspension left the dialysis tube.

In additional to Comparative Example 1, Examples 1 to 12 described in the following are also comparative examples.

## EXAMPLE 1

The process of Comparative Example 1 was repeated on raw jute fibers. For each of the trials using jute fiber, about 1 gram of the fibers was used. Table 1 below shows the different conditions tested in order to optimize the reactions for jute fibers.

TABLE 1

| Sample | Reaction conditions | HNO₃ | NaNO₂ | Results |
|---|---|---|---|---|
| 1 | 12 hours /50°C | 14 ml (22 mmol) | 3.92 grams (57 mmol) | Obtained nanofibers |
| 2 | 12 hours /50°C | 14 ml (22 mmol) | 1.96 grams (28 mmol) | Obtained Nanofibers |

## EXAMPLE 2

A titration method was used to quantitatively determine the percent carboxyl content of the cellulose nanofibers of Comparative Example 1 and Example 1. About 0.25 grams of the bamboo nanofiber sample from Comparative Example 1 was suspended in a 25 mL 2% calcium acetate w/v solution for about 30 minutes to disperse. The mixture of the nanofibers and the calcium acetate solution was titrated with about 0.1 N NaOH. The indicator used was phenolthalien. This same process was repeated for the jute nanofibers of Example 1.

The percent carboxyl content was determined using equation (i) below:

$$\text{Carboxyl groups (\%)} \quad = \quad \frac{N \times V \times MW_{COOH}}{\text{Weight of Sample (mg)}} \qquad (i)$$

In the above equation, N is the molarity of the NaOH solution (0.1), V is the volume in mL of the NaOH consumed and $MW_{COOH}$ is the molecular weight of -COOH, the carboxyl group (about 45 grams). When the percent carboxyl content was calculated for the bamboo cellulose nanofibers, the result was about 21.6% and when calculated for the raw jute nanofibers, the result was about 17.1 %.

## EXAMPLE 3

In order to conduct morphological studies, the neutralized fibers produced in Comparative Example 1 and Example 1 (obtained after dialysis) were first frozen using liquid nitrogen. The neutralized fiber suspensions were transferred to glass vials and the sample was frozen with liquid nitrogen. The vials were then placed into a larger glass jar that was later attached to a cryogenic freezing machine (lyzophilizer) at -43 °C. After 12 hours, the samples were prepared for TEM imaging. TEM imaging was then used to determine the average diameter and lengths of the nanofibers.

The average diameter of the oxidized bamboo cellulose nanofibers of Comparative Example 1 was determined to be between about 5 and about 10 nm. The average length was about 97 $\pm$ 33 nm. The average length was analyzed using a program called ImageJ used to process multidimensional images. Based on the scale for the TEM image, the lengths of 20 different fibers were measured using ImageJ. The average fiber lengths and standard deviations were also calculated by using the program.

The average diameter for the oxidized cellulose nanofibers obtained from raw jute from Sample 3 of Example 1 was also between about 5 nm and about 10 nm. After 20 fibers were measured in ImageJ, the average length was found to be about 214 nm with a standard deviation of about 19 nm. Therefore, while the diameters of the nanofibers were very similar in size, the average length of the raw jute fibers was more than double that of the bamboo cellulose nanofibers. The TEM images also indicated that the bamboo cellulose nanofibers had a higher degree of agglomeration than the jute nanofibers.

## EXAMPLE 4

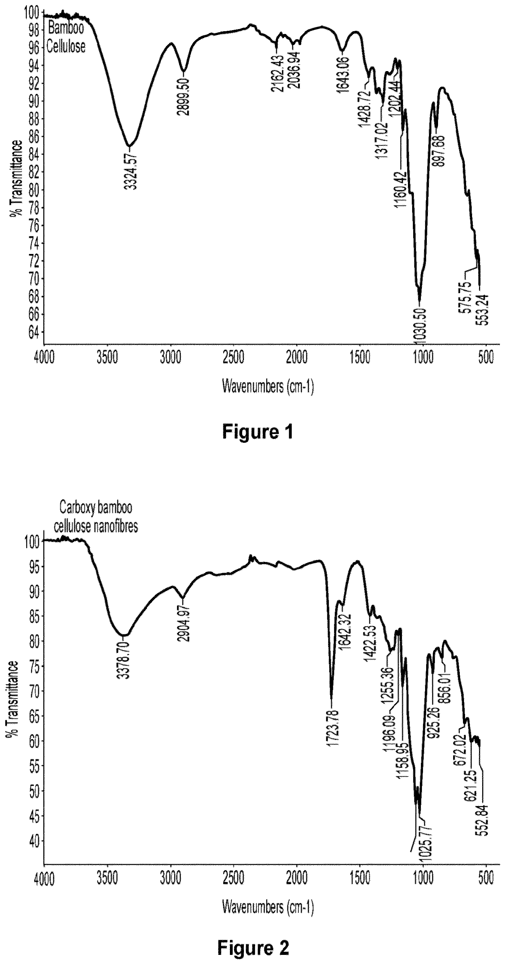

Fourier Transform Infrared Spectroscopy (FTIR) is a characterization technique that uses infrared radiation to examine the molecular absorption and transmission of a material. The resulting infrared spectrum can qualitatively analyze the amount of components in the material, as the absorption peaks correspond to the frequencies of vibrations between the bonds that make up the material. This technique was used after cryogenic freezing of the nanofiber samples produced in Comparative Example 1 and Example 1 to confirm the presence of carboxyl groups on the surface of the nanofibers produced. To determine whether the prepared bamboo nanofibers of Comparative Example 1 were carboxylated, the FTIR spectra of the bamboo cellulose before treatment (Figure 1) and that of the bamboo nanofibers after the HNO₃/NaNO₂ treatment (Figure 2) were compared.

Table 2 below shows which bond each peak indicated on the FTIR spectra corresponds to. The corresponding bond was determined through previous literature that studied the FTIR spectra of cellulose. The primary difference between the two spectra is that in Figure 2, there is a peak at about 1723.78 cm⁻¹, which, as shown in the table below, corresponds to the C=O stretching vibration. This bond is a part of a carboxyl group, and therefore, qualitatively demonstrates that a portion of the bamboo cellulose nanofibers were oxidized.

TABLE 2

| Peak Wavenumbers and Corresponding Bonds | | |
|---|---|---|
| Peak Wavenumber (cm$^{-1}$) in Figure 1 | Peak Wavenumber (cm$^{-1}$) in Figure 2 | Bonds |
| 3324. 57 | 3378.70 | OH stretching |
| 2899.50 | 2904.97 | C-H symmetrical stretching |
| — | 1723.78 | C=O stretching vibration |
| 1643.06 | 1642.32 | OH bending of absorbed water |
| 1030.50 | 1025.77 | C-C, C-OH, C-H ring & side group vibrations |

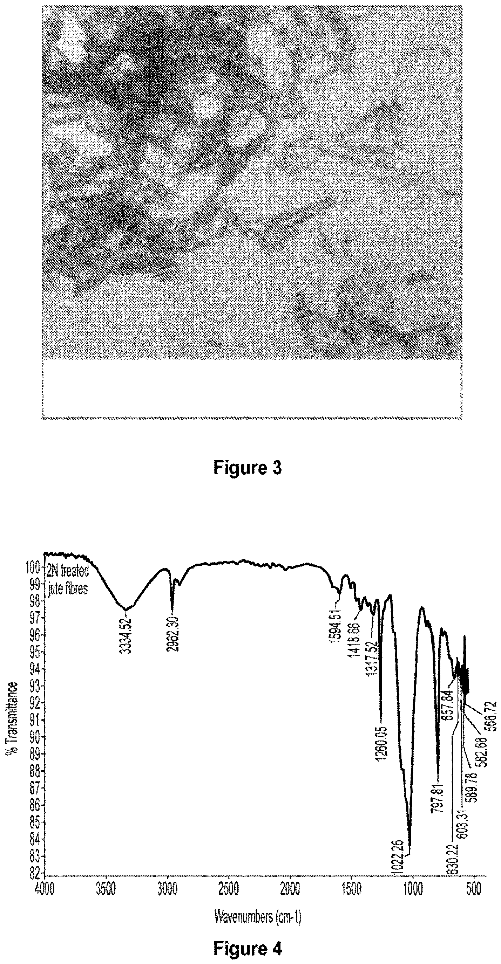

FTIR spectra of bamboo cellulose of Comparative Example 1 clearly showed a high cellulose content, represented by the hydroxyl peak at 3324 cm$^{-1}$ (Figure 1). The appearance of a -C=O peak at 1723 cm$^{-1}$ (Figure 2) showed the presence of carboxy group in cellulose nanofibers.
The TEM image of carboxylated jute fibers of Example 1 shows the fiber diameter from about 4 nm to about 6 nm; and lengths from about 90 nm to about 140 nm as presented in Figure 3.

### EXAMPLE 5

The calcium titration method was used to quantify the percent carboxyl content of the nanofibers of Comparative Example 1 and Example 1. The cellulose nanofibers were suspended in a calcium acetate solution and the indicator phenolphthalein was added. The mixture was then titrated with NaOH. Using the equation specified in the previous section, the percent carboxyl content for the oxidized bamboo cellulose nanofibers was calculated to be about 21.6%. This means that for every 1000 anhydroglucose units in the bamboo cellulose nanofibers, approximately 216 units contained the functional carboxyl group. The percent carboxyl content of the oxidized raw jute fiber nanofibers was found to be about 17.1%.

### EXAMPLE 6

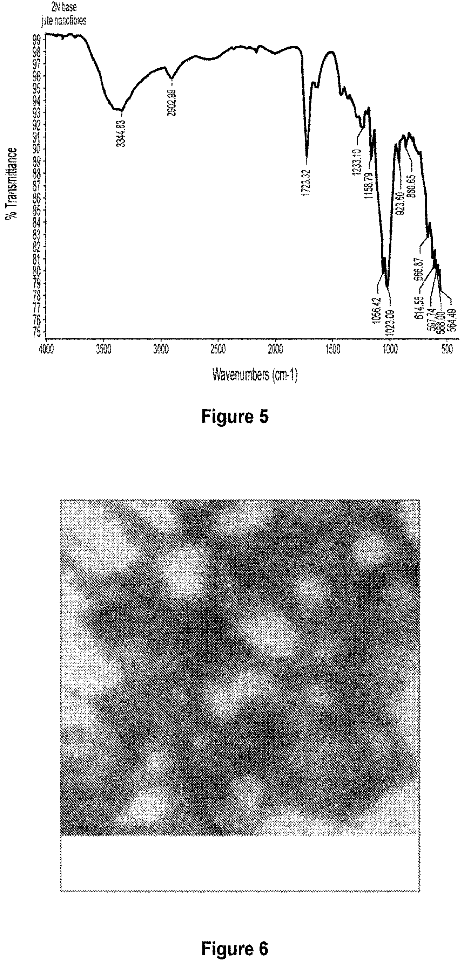

Raw jute fibers (about 1 gram) were immersed in the beaker containing about 20 ml of 2N NaOH solution. This was allowed to stir at about 25 °C for about 24 hours. The base treated jute fibers were then washed with distilled water until the filtrate became neutral (pH = 7-8). The washed jute fibers were then dried in an oven at about 70 °C for about 12 hours. The yield of the treated jute fibers was approximately 76 %.
About 0.50 grams of base treated jute fiber was added to a 2-neck round bottom flask. About 14 ml concentrated HNO$_3$ (85%) was then added into the beaker under continuous stirring. Then, about 1.96 grams of sodium nitrite was added to the reaction mixture. On addition of sodium nitrite, red fumes were formed. To prevent the red fumes escaping, both mouths of the round bottom flask were covered by stoppers. The reaction was allowed to continue at about 50 °C for about 12 hours. The reaction was quenched by using about 250 ml of distilled water. The product was washed by using distilled water with the help of centrifugation (about 6500 rpm, for about 15 minutes) as follows. After each round of centrifugation, the supernatant were decanted off and the solid part again stirred with the distilled water for the next round of centrifugation. The above step was repeated several times, until the filtrate became neutral. The yield of the above procedure was about 38%.
The prepared cellulose nanofibers were characterized using FTIR and TEM. FTIR spectra of 2N treated jute fibers clearly showed a high cellulose content, represented by the hydroxyl peak at 3334 cm$^{-1}$ (Figure 4). The appearance of a -C=O peak at 1723 cm$^{-1}$ in cellulose nanofibers after the HNO$_3$/NaNO$_2$ (Figure 5) showed the presence of carboxy groups in cellulose nanofibers. The TEM image of 2N treated jute fibers (Figure 6) represents that the dimensions of jute fibers with diameters from about 4 nm to about 8 nm; lengths from about 110 nm to about 300 nm.

### EXAMPLE 7

Raw jute fibers (about 1 gram) were mixed in a beaker containing about 20 ml of 4N NaOH solution. The contents were allowed to stir at about 25 °C for about 24 hours. The base treated jute fibers were then washed with distilled water until the filtrate became neutral (pH= 7-8). The washed jute fibers were then dried in an oven at about 70 °C for about 12 hours. The yield of the treated jute fibers was about 66 %.

About 0.50 grams of base treated jute fibers was added to a 2-neck round bottom flask. About 14 ml concentrated $HNO_3$ (85%) was then added to the beaker under continuous stirring. Then, about 1.96 grams of sodium nitrite was added to the reaction mixture. On addition of sodium nitrite, red fumes were formed. To prevent the red fumes escaping, both mouths of the round bottom flask were covered by stoppers. The reaction continued at about 50 °C for about 12 hours. The reaction was quenched using about 250 ml of distilled water. The product was washed with the distilled water. After each round of centrifugation, the supernatant was decanted off and the solid part again stirred with distilled water for the next round of centrifugation. The above step was repeated several times, until the filtrate became neutral. The yield of cellulose nanofibers obtained was about 25%.

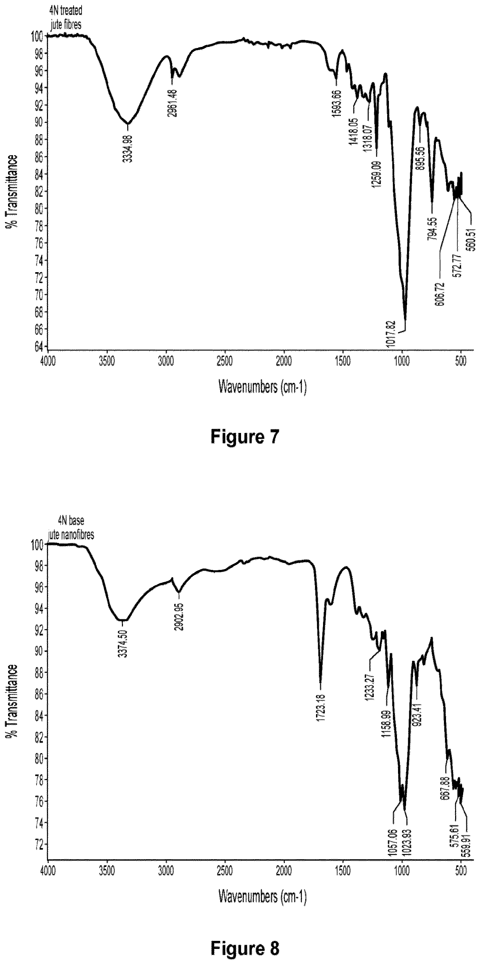

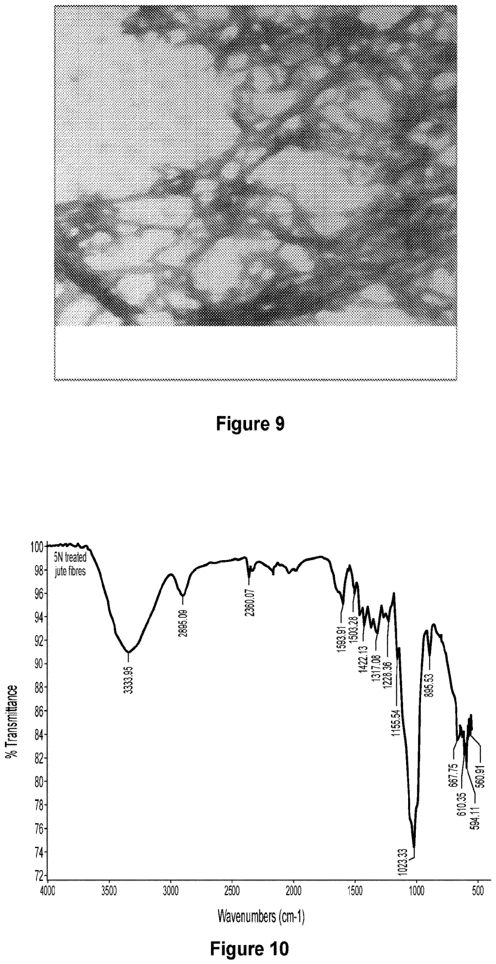

Prepared cellulose nanofibers were then characterized by using FTIR and TEM. The FTIR spectra of 4N treated jute fibers showed a high cellulose content represented by the hydroxyl peak at 3334 $cm^{-1}$ (Figure 7). The appearance of a -C=O peak at 1723 $cm^{-1}$ after the $HNO_3/NaNO_2$ treatment (Figure 8) showed the presence of carboxy group in cellulose nanofibers. The TEM image of 4N treated jute fibers revealed the dimensions of jute fibers with diameters from about 5 nm to about 6.5 nm, and lengths from about 112 nm to about 250 nm (Figure 9).

## EXAMPLE 8

Raw jute fibers (about 1 gram) were mixed in a beaker containing about 20 ml of 5N NaOH solution. The contents were allowed to stir at about 25 °C for about 24 hours. The base treated jute fibers were then washed with the distilled water until the filtrate became neutral (pH = 7-8). The washed jute fibers were then dried in an oven at about 70 °C for about 12 hours. The yield of the treated jute fibers was about 60%.

About 0.50 grams of base treated jute fibers were introduced to a 2 neck round bottom flask. About 14 ml concentrated $HNO_3$ (85%) was then added into the flask under continuous stirring. Then, about 1.96 grams of sodium nitrite was added to the reaction mixture. On addition of sodium nitrite, red fumes were formed. To prevent the red fumes escaping, both mouths of the round bottom flask were covered by stoppers. The reaction was carried out at about 50 °C for about 12 hours. The reaction was quenched by using the about 250 ml of distilled water.

After each round of centrifugation, the supernatant was decanted off and the solid part again stirred with the distilled water for the next round of centrifugation. The above step was repeated several times, until the filtrate became neutral. The yield of cellulose nanofibers obtained was about 20%.

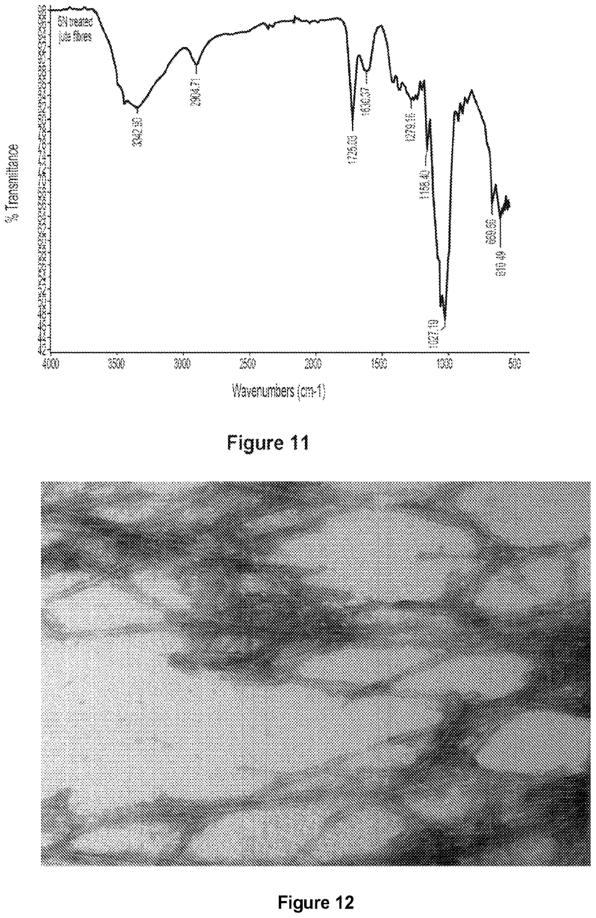

Prepared cellulose nanofibers were then characterized by using FTIR and TEM. FTIR spectra of 5N treated jute fibers clearly showed a high cellulose content, represented by the hydroxyl peak at 3334 $cm^{-1}$ (Figure 10). The appearance of a -C=O peak at 1725 $cm^{-1}$ (Figure 11) showed the presence of carboxy group in cellulose nanofibers. The TEM image of 5N treated jute fibers showed the dimensions of jute fibers with diameters from about 4 nm to about 6 nm; lengths from about 100 nm to about 300nm (Figure 12).

## EXAMPLE 9

Raw jute fibers (about 1 gram) were introduced to a 2 neck round bottom flask. About 14 ml concentrated $HNO_3$ (85%) was then added into the flask under continuous stirring. Then, about 3.92 grams of sodium nitrite was added to the reaction mixture. On addition of sodium nitrite, red fumes were formed. To prevent the red fumes escaping, both mouths of the round bottom flask were covered by stoppers. The reaction was carried out at about 50 °C for about 12 hours. The reaction was quenched by using about 250 ml of distilled water. After each round of centrifugation, the supernatant was decanted off and the solid part again stirred with the distilled water for the next round of centrifugation. The above step was repeated several times, until the filtrate became neutral.

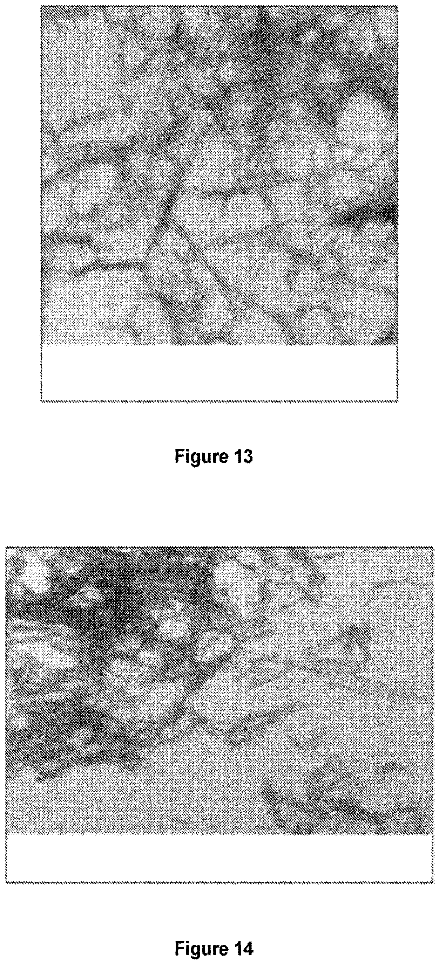

The TEM image of carboxylated jute fiber show the fiber diameter from about 4 nm to about 6 nm; and lengths from about 100 nm to about 300 nm as presented in Figure 13.

## EXAMPLE 10

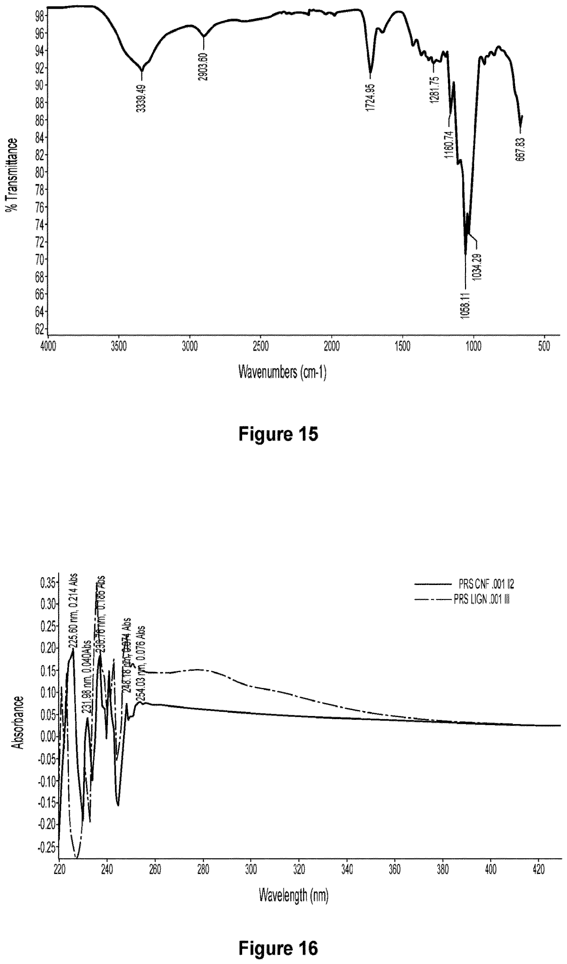

Jute fiber (about 1 gram) was introduced to a 2 neck round bottom flask. About 14 ml concentrated $HNO_3$ (85%) was then added into the flask under continuous stirring. On addition of nitric acid, red fumes were formed. To prevent the red fumes escaping, both mouths of the round bottom flask were covered by stoppers. The reaction was carried out at about 50 °C for about 24 hours. The reaction was quenched by using about 250 ml of distilled water. After each round of centrifugation, the supernatant was decanted off and the solid part again stirred with the distilled water for the next round of centrifugation. The above step was repeated several times, until the filtrate became neutral. The morphological studies were done by TEM as shown in Figure 14 and FTIR spectra of carboxylated/oxidized cellulose nanofibers as shown in Figure 15.

The UV-visible spectroscopy is a good technique to characterize lignin. Lignin includes p-coumaryl alcohol, coniferyl alcohol and sinapyl alcohol units. These units are UV active at 209, 259 ppm, 254 ppm and 267- 287 ppm. The UV spectra of pure delignified lignin (procured from Sigma Aldrich) was compared with a UV spectra for the carboxyc-cellulose nanofibers produced from raw jute fibers.

As shown in Figure 16, the UV spectra of carboxycellulose nanofibers (0.001 wt. %) had no absorbance at ~ 280 nm, which demonstrates the absence of portions of lignin that are acid soluble (the sinapyl alcohol units). The UV spectra also showed some absorbance around 254 and 248 nm, demonstrating the presence of small amounts of coumaryl alcohol and coniferyl alcohol.

## EXAMPLE 11

Raw jute fibers (about 1 gram) were immersed in a beaker containing about 20 ml of 3N NaOH solution. This was allowed to stir at about 25 °C for about 24 hours. The base treated jute fibers were then washed with distilled water until the filtrate became neutral (pH = 7-8). The washed jute fibers were then dried in an oven at about 70 °C for about 12 hours. The yield of the treated jute fibers was approximately 75 %. About 0.50 grams of base treated jute fiber was added to a 2-neck round bottom flask. About 14 ml concentrated $HNO_3$ (85%) was then added into the beaker under continuous stirring. Then, about 1.96 grams of sodium nitrite was added to the reaction mixture. On addition of sodium nitrite, red fumes were formed. To prevent the red fumes escaping, both mouths of the round bottom flask were covered by stoppers. The reaction was allowed to continue at about 50 °C for about 12 hours. The reaction was quenched by using about 250 ml of distilled water. The product was washed by using distilled water with the help of centrifugation (about 6500 rpm, for about 15 minutes) as follows. After each round of centrifugation, the supernatant were decanted off and the solid part again stirred with the distilled water for the next round of centrifugation. The above step was repeated several times, until the filtrate became neutral. The yield of the above procedure was about 40%. The carboxyl content measured by calcium acetate titration method is 16.9 %.

Table 3 below summarizes the reaction conditions, concentration of nitric acid and sodium nitrite to produce nanocellulose: carboxylated/oxidized cellulose nanofibers for Examples 1-11.

**Table 3**

| Source | Reaction condition | Concentrated $HNO_3$ (mmol) | Concentrated $NaNO_2$ (mmol) | Yield (%) | Carboxy content (%) |
|---|---|---|---|---|---|
| Bamboo Cellulose | 50°C/12 hours | 22.2 | 28 | 38 | 21.6 |
| Jute Fiber | 50°C/12 hours | 22.2 | 28 | 30 | 17.1 |
| Jute fiber | 50°C/24 hours | 22.2 | - | 10 | 14.0 |
| 2N NaOH treated Jute fibers | 50°C/12 hours | 22.2 | 28 | 38 | 17.6 |
| 3N NaOH treated Jute fibers | 50°C/12 hours | 22.2 | 28 | 40 | 16.9 |
| 4N NaOH treated Jute fibers | 50°C/12 hours | 22.2 | 28 | 25 | 34.2 |
| 5N NaOH treated Jute fibers | 50°C/12 hours | 22.2 | 28 | 20 | 17.0 |

## EXAMPLE 12

Raw jute fibers and jute fibers treated in accordance with the present disclosure as described above in Example 9 were subjected to thermogravimetric analysis (TGA) and Derivative Thermogravimetric analysis (DTG), and a curve was obtained for each. The resulting curve/graph showed the maximum degradation point during the thermal treatment of the molecule.

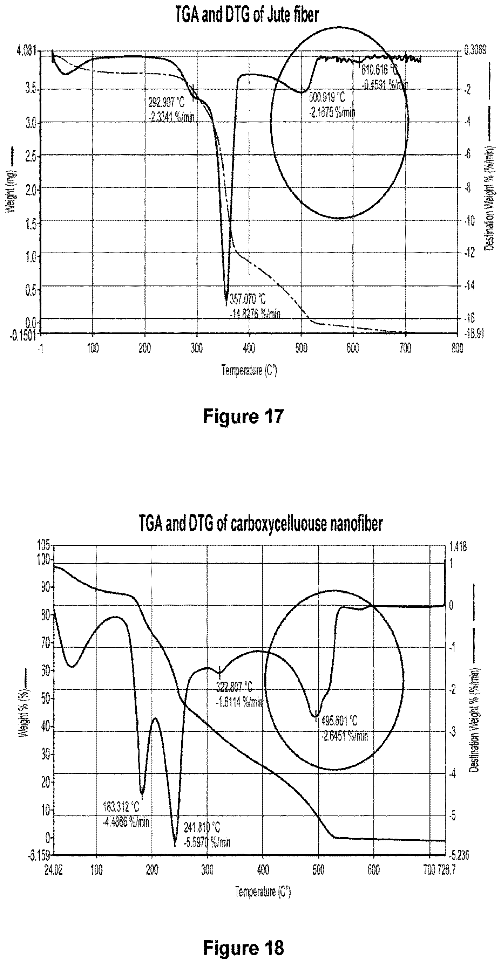

For raw jute fibers (Figure 17), the TGA/DTG results showed an initial onset temperature at ~280° C and a final onset temperature at ~520° C. However, the carboxycellulose nanofibers obtained from jute (Figure 18) had an onset temperature at ~170° C and a final temperature at about 481° C. The decrease in onset temperature for the carboxycellulose nanofibers as compared with the raw jute fibers was due to the presence of carboxy group, which had thermally weak bonds.

The DTG of raw jute fiber (Figure 17) showed a 4-step degradation, with one peak at 292.9°C, corresponding to hemicellulose; a second peak at 357°C corresponding to anhydroglucose units of cellulose; and a third peak and fourth peak at 500°C and 610°C, related to the lignin moiety.

The DTG of the carboxycellulose nanofibers (Figure 18) also showed a 4-step degradation, but at different temperatures. The peaks at 183°C, 241°C and 322°C corresponded to cellulose; the peak at 495°C showed the presence of lignin in the carboxycellulose nanofibers.

The foregoing Examples confirmed that the method of the present disclosure was effective in both the defibrillation process of 'reducing' cellulose fibers to nanoscale dimensions, and in oxidizing, or carboxylating, the resultant nanofibers. The Examples demonstrate that this dual mechanism may be utilized to prepare carboxycellulose nanofibers for not only cellulose that has already been extracted (bamboo cellulose), but also for raw forms of plant biomass that had not undergone any pretreatments (jute fibers), thereby drastically decreasing the amount of mechanical energy and harsh chemicals required.

The results of the morphological studies, as evidenced by the TEM images, showed the shapes of the nanofibers and their degree of dispersal. In addition, the average diameters of the bamboo nanofibers and jute nanofibers (about 5 nm to about 10 nm) and the average lengths, 97 ± 33 nm and 214 ± 19 nm, respectively, were estimated. The presence of carboxyl functional groups as a result of oxidation was also confirmed qualitatively through an examination of the peak wavenumbers and their corresponding bonds in the FTIR spectra, but also quantitatively, through the calcium acetate titration method.

The results demonstrate that the proposed acid/oxidizing agent process was effective to produce carboxylated nanocelluloses in a substantially green and environmentally sustainable manner, and this method is feasible for commercialization by using simple tools, available even in developing countries.

The use of raw biomass rather than extracted cellulose (which generally involves extensive pretreatment procedures) will greatly reduce energy consumption, making the process feasible for cost-effective large-scale productions. Unlike prior art methods, the methods of the present disclosure are not limited to the use of native cellulose, i.e., the methods of the present disclosure may be used to produce carboxycellulose nanofibers from any type of plant biomass. Moreover, the method of the present disclosure may reduce consumption of toxic chemicals by 50-60% and may also reduce electrical consumption by 30-40% compared to conventional processes.

It will be understood that various modifications may be made to the embodiments disclosed herein. Therefore, the above description should not be construed as limiting, but merely as an exemplification of preferred embodiments. Those skilled in the art will envision other modifications within the scope of the present disclosure. Such modifications and variations are intended to come within the scope of the following claims.

**Claims**

1. A method comprising:

   contacting plant biomass with an acid component comprising nitric acid to form a first mixture;
   contacting the first mixture with an oxidizing agent including a nitrate salt selected from sodium nitrate, potassium nitrate, calcium nitrate, magnesium nitrate, lithium nitrate, ammonium nitrate, nitrate esters, and combinations thereof to form a second mixture;
   holding the second mixture at a temperature from 40°C to 70°C, for a period of time from 30 minutes to 72 hours; and
   recovering carboxycellulose nanofibers from the second mixture, wherein the carboxycellulose nanofibers have a mean fiber length from 50 nm to 1000 nm.

2. The method of claim 1, wherein the plant biomass includes lignocellulose wood, non-lignocellulose wood, lignocellulose, pure cellulose, and combinations of thereof; or
   wherein the plant biomass is obtained from non-wood sources selected from the group consisting of jute, bamboo, cotton, banana rachis, wheat straw, barley, hemp, flax straw, coconut fiber, soy hull, pea hull fiber, rice husk, sugarcane bagasse, pineapple leaf rachis, sisal fiber, tunicates, black spruce, eucalyptus, valonia, bacterial celluloses, and combinations thereof.

3. The method of claim 1, wherein the acid component further comprises an additional acid selected from the group consisting of hydrochloric acid, sulfuric acid, acetic acid, hydrobromic acid, hydrofluoric acid, and combinations thereof ; or

wherein the acid is at a concentration from 10 mmol to 300 mmol;
or wherein the acid is at a concentration from 20 to 250 mmol.

4. The method of claim 1,

wherein the oxidizing agent is at a concentration from 0.1 mmol to 60 mmol;
or
wherein the oxidizing agent is at a concentration from 10 mmol to 30 mmol.

5. The method of claim 1, wherein the second mixture is at a temperature from 40°C to 60°C, for a period of time from 3 hours to 12 hours.

6. The method of claim 1, further comprising subjecting the second mixture to mechanical treatments selected from the group consisting of sonication, homogenization, cryocrushing, grinding, steam explosion, and combinations thereof, wherein the method occurs for a period of from 1 minute to 6 hours.

7. The method of claim 1, wherein the carboxycellulose nanofibers have a mean nominal diameter from 2 nm to 20 nm; or
wherein the carboxycellulose nanofibers have a lignin content from 2% by weight to 10% by weight.

8. The method of claim 1,

wherein the acid component is at a concentration from 10 mmol to 300 mmol; and
the oxidizing agent is at a concentration from 0.1 mmol to 60 mmol.

9. The method of claim 8, wherein the plant biomass includes lignocellulose wood, non-lignocellulose wood, lignocellulose, pure cellulose, and combinations of thereof;
or
wherein the plant biomass is obtained from non-wood sources selected from the group consisting of jute, bamboo, cotton, banana rachis, wheat straw, barley, hemp, flax straw, coconut fiber, soy hull, pea hull fiber, rice husk, sugarcane bagasse, pineapple leaf rachis, sisal fiber, tunicates, black spruce, eucalyptus, valonia, bacterial celluloses, and combinations thereof.

10. The method of claim 8, wherein the acid component further comprises an additional acid selected from the group consisting of hydrochloric acid, sulfuric acid, acetic acid, hydrobromic acid, hydrofluoric acid, and combinations thereof ;
or
wherein the acid is at a concentration from 20 to 250 mmol.

11. The method of claim 8, wherein the oxidizing agent is at a concentration from 10 mmol to 30 mmol.

12. The method of claim 8, wherein the second mixture is at a temperature from 40°C to 60°C, for a period of time from 3 hours to 12 hours.

13. The method of claim 8, further comprising subjecting the second mixture to mechanical treatments selected from the group consisting of sonication, homogenization, cryocrushing, grinding, steam explosion, and combinations thereof, wherein the method occurs for a period of from 1 minute to 6 hours.

14. The method of claim 8, wherein the carboxycellulose nanofibers have a mean nominal diameter from 2 nm to 20 nm; or
wherein the carboxycellulose nanofibers have a lignin content from 2% by weight to 10% by weight.

**Patentansprüche**

1. Verfahren, umfassend:

- Inkontaktbringen von pflanzlicher Biomasse mit einer Säurekomponente, die Salpetersäure umfasst, zur Bildung eines ersten Gemischs,
- Inkontaktbringen des ersten Gemischs mit einem Oxidationsmittel, das ein Nitratsalz, ausgewählt aus Natriumnitrat, Kaliumnitrat, Calciumnitrat, Magnesiumnitrat, Lithiumnitrat, Ammoniumnitrat, Nitratestern und Kombinationen davon, umfasst, zur Bildung eines zweiten Gemischs,
- Halten des zweiten Gemisches auf einer Temperatur von 40°C bis 70°C über eine Zeitspanne von 30 Minuten bis 72 Stunden und
- Gewinnen von Carboxycellulose-Nanofasern aus dem zweiten Gemisch, wobei die Carboxycellulose-Nanofasern eine mittlere Faserlänge von 50 nm bis 1000 nm aufweisen.

2. Verfahren nach Anspruch 1, wobei die pflanzliche Biomasse Lignocellulose-Holz, Nicht-Lignocellulose-Holz, Lignocellulose, reine Cellulose und Kombinationen davon umfasst, oder
wobei die pflanzliche Biomasse aus Nicht-Holz-Quellen erhalten wird, die aus der aus Jute, Bambus, Baumwolle, Bananenblattrippen, Weizenstroh, Gerste, Hanf, Flachsstroh, Kokosnussfasern, Sojaschalen, Erbsenschalenfasern, Reishülsen, Zuckerrohrbagasse, Ananasblattrippen, Sisalfasern, Tunikaten, Schwarzfichte, Eukalyptus, Valonia, Bakteriencellulosen und Kombinationen davon bestehenden Gruppe ausgewählt sind.

3. Verfahren nach Anspruch 1, wobei die Säurekomponente ferner eine zusätzliche Säure, ausgewählt aus der aus Salzsäure, Schwefelsäure, Essigsäure, Bromwasserstoffsäure, Fluorwasserstoffsäure und Kombinationen davon bestehenden Gruppe, oder

wobei die Säure in einer Konzentration von 10 mmol bis 300 mmol vorliegt, oder
wobei die Säure in einer Konzentration von 20 bis 250 mmol vorliegt.

4. Verfahren nach Anspruch 1,

worin das Oxidationsmittel in einer Konzentration von 0,1 mmol bis 60 mmol vorliegt, oder
wobei das Oxidationsmittel in einer Konzentration von 10 mmol bis 30 mmol vorliegt.

5. Verfahren nach Anspruch 1, wobei sich das zweite Gemisch auf einer Temperatur von 40°C bis 60°C über eine Zeitspanne von 3 Stunden bis 12 Stunden befindet.

6. Verfahren nach Anspruch 1, ferner umfassend das Unterziehen des zweiten Gemischs mechanischen Behandlungen, ausgewählt aus der aus Beschallung, Homogenisierung, Kryozerkleinerung, Mahlen, Dampfexplosion und Kombinationen davon bestehenden Gruppe, wobei das Verfahren über einen Zeitraum von 1 Minute bis 6 Stunden erfolgt.

7. Verfahren nach Anspruch 1, wobei die Carboxycellulose-Nanofasern einen mittleren Nenndurchmesser von 2 nm bis 20 nm aufweisen, oder
wobei die Carboxycellulose-Nanofasern einen Ligningehalt von 2 Gew.-% bis 10 Gew.-% aufweisen.

8. Verfahren nach Anspruch 1,
wobei die Säurekomponente in einer Konzentration von 10 mmol bis 300 mmol vorliegt, und das Oxidationsmittel in einer Konzentration von 0,1 mmol bis 60 mmol vorliegt.

9. Verfahren nach Anspruch 8, wobei die pflanzliche Biomasse Lignocellulose-Holz, Nicht-Lignocellulose-Holz, Lignocellulose, reine Cellulose und Kombinationen davon umfasst, oder
wobei die pflanzliche Biomasse aus Nicht-Holz-Quellen erhalten wird, die aus der aus Jute, Bambus, Baumwolle, Bananenblattrippen, Weizenstroh, Gerste, Hanf, Flachsstroh, Kokosnussfasern, Sojaschalen, Erbsenschalenfasern, Reishülsen, Zuckerrohrbagasse, Ananasblattrippen, Sisalfasern, Tunicaten, Schwarzfichte, Eukalyptus, Valonia, Bakteriencellulosen und Kombinationen davon bestehenden Gruppe ausgewählt sind.

10. Verfahren nach Anspruch 8, wobei die Säurekomponente ferner eine zusätzliche Säure umfasst, die aus der Salzsäure, Schwefelsäure, Essigsäure, Bromwasserstoffsäure, Flusssäure und Kombinationen davon bestehenden Gruppe ausgewählt ist, oder
wobei die Säure in einer Konzentration von 20 bis 250 mmol vorliegt.

11. Verfahren nach Anspruch 8, wobei das Oxidationsmittel in einer Konzentration von 10 mmol bis 30 mmol vorliegt.

**12.** Verfahren nach Anspruch 8, wobei das zweite Gemisch bei einer Temperatur von 40°C bis 60°C über eine Zeitspanne von 3 Stunden bis 12 Stunden gehalten wird.

**13.** Verfahren nach Anspruch 8, ferner umfassend das Unterziehen der zweiten Mischung mechanischen Behandlungen, ausgewählt aus der aus Beschallung, Homogenisierung, Kryozerklerierung, Mahlen, Dampfexplosion und Kombinationen davon bestehenden Gruppe, wobei das Verfahren über einen Zeitraum von 1 Minute bis 6 Stunden erfolgt.

**14.** Verfahren nach Anspruch 8, wobei die Carboxycellulose-Nanofasern einen mittleren Nenndurchmesser von 2 nm bis 20 nm aufweisen, oder
wobei die Carboxycellulose-Nanofasern einen Ligningehalt von 2 Gew.-% bis 10 Gew.-% aufweisen.

**Revendications**

**1.** Procédé consistant à :

- mettre en contact de la biomasse végétale avec un composant acide comprenant de l'acide nitrique pour former un premier mélange,
- mettre en contact du premier mélange avec un agent oxydant comprenant un sel de nitrate choisi parmi le nitrate de sodium, le nitrate de potassium, le nitrate de calcium, le nitrate de magnésium, le nitrate de lithium, le nitrate d'ammonium, les esters de nitrate et leurs combinaisons pour former un second mélange,
- maintenir le second mélange à une température comprise entre 40°C et 70°C, pendant une durée comprise entre 30 minutes et 72 heures, et
- récupérer les nanofibres de carboxycellulose du second mélange, ces nanofibres de carboxycellulose ayant une longueur moyenne comprise entre 50 nm à 1000 nm.

**2.** Procédé selon la revendication 1,
selon lequel

la biomasse végétale comprend du bois lignocellulosique, du bois non lignocellulosique, de la lignocellulose, de la cellulose pure et leurs combinaisons,
ou
la biomasse végétale est obtenue à partir de sources non ligneuses sélectionnées dans le groupe constitué par : jute, bambou, coton, rachis de banane, paille de blé ou d'orge, chanvre, paille de lin, fibre de coco, coque de soja, fibre de cosses de pois, balle de riz, bagasse de canne à sucre, rachis de feuille d'ananas, fibre de sisal, tuniciers, épicéa noir, eucalyptus, valonia, celluloses bactériennes, et leurs combinaisons.

**3.** Procédé selon la revendication 1,
selon lequel

le composant acide comprend en outre un acide supplémentaire choisi dans le groupe constitué par : acide chlorhydrique, acide sulfurique, acide acétique, acide bromhydrique, acide fluorhydrique et de leurs combinaisons,
ou
l'acide est à une concentration de 10 mmol à 300 mmol,
ou
l'acide est à une concentration de 20 à 250 mmol.

**4.** Procédé selon la revendication 1.
selon lequel

l'agent oxydant est à une concentration de 0,1 mmol à 60 mmol,
ou
l'agent oxydant est à une concentration de 10 mmol à 30 mmol.

**5.** Procédé selon la revendication 1,
selon lequel
le second mélange est maintenu à une température de 40°C à 60°C, pendant une durée comprise entre 3 et 12 heures.

**6.** Procédé selon la revendication 1,
consistant en outre à :
soumettre le second mélange à des traitements mécaniques choisis dans le groupe constitué par : sonication, homogénéisation, cryoconcassage, broyage, explosion à la vapeur, et leurs combinaisons, le procédé s'effectuant pendant une période allant de 1 minute à 6 heures.

**7.** Procédé selon la revendication 1,
selon lequel

les nanofibres de carboxycellulose ont un diamètre nominal moyen de 2 nm à 20 nm,
ou
les nanofibres de carboxycellulose ont une teneur en lignine comprise entre 2 % et 10 % pondéraux.

**8.** Procédé selon la revendication 1,
selon lequel
le composant acide est à une concentration de 10 mmol à 300 mmol, et l'agent oxydant est à une concentration de 0,1 mmol à 60 mmol.

**9.** Procédé selon la revendication 8,
selon lequel

la biomasse végétale comprend : bois lignocellulosique, bois non lignocellulosique, lignocellulose, cellulose pure et leurs combinaisons,
ou
la biomasse végétale est obtenue à partir de sources non ligneuses sélectionnées dans le groupe constitué par : jute, bambou, coton, rachis de banane, paille de blé ou d'orge, chanvre, paille de lin, fibre de coco, coque de soja, fibre de cosses de pois, balle de riz, bagasse de canne à sucre, rachis de feuille d'ananas, fibre de sisal, tuniciers, épicéa noir, eucalyptus, valonia, celluloses bactériennes et leurs combinaisons.

**10.** Procédé selon la revendication 8,
selon lequel

le composant acide comprend en outre un acide supplémentaire choisi dans le groupe constitué par : acide chlorhydrique, acide sulfurique, acide acétique, acide bromhydrique, acide fluorhydrique et leurs combinaisons,
ou
l'acide est à une concentration de 20 à 250 mmol.

**11.** Procédé selon la revendication 8,
selon lequel
l'agent oxydant est à une concentration de 10 mmol à 30 mmol.

**12.** Procédé selon la revendication 8,
selon lequel
le deuxième mélange est maintenu à une température de 40°C à 60°C, pendant une durée de 3 heures à 12 heures.

**13.** Procédé selon la revendication 8,
consistant en outre à :
soumettre le second mélange à un traitement mécanique choisi dans le groupe comprenant : sonicalion, homogénéisation, cryobroyage, broyage, explosion à la vapeur, et leurs combinaisons, le procédé étant appliqué pendant une durée de 1 minute à 6 heures.

**14.** Procédé selon la revendication 8,
selon lequel

les nanofibres de carboxycellulose ont un diamètre nominal moyen compris entre 2 nm et 20 nm,
ou
les nanofibres de carboxycellulose ont une teneur en lignine comprise entre 2 % en poids et 10 % en poids.

Figure 1

Figure 2

Figure 3

Figure 4

**Figure 5**

**Figure 6**

**Figure 7**

**Figure 8**

Figure 9

Figure 10

Figure 11

Figure 12

**Figure 13**

**Figure 14**

**Figure 15**

**Figure 16**

## TGA and DTG of Jute fiber

**Figure 17**

## TGA and DTG of carboxycelluouse nanofiber

**Figure 18**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014195971 A
- US 6627749 B
- US 2007203335 A

**Non-patent literature cited in the description**

- **MA, HONGYANG et al.** Ultra-fine Cellulose Nanofibers: New Nano-scale Materials for Water Purification. *Journal of Materials Chemistry,* 2011, vol. 21, 7507-10